# EUROPÄISCHE PATENTSCHRIFT

(11) **EP 1 439 995 B1**
(45) Veröffentlichungstag und Bekanntmachung des Hinweises auf die Patenterteilung: **02.02.2005**
(21) Anmeldenummer: 02781140.5
(22) Anmeldetag: 22.10.2002
(51) Int. Cl.: B62D 29/00

(54) **LEICHTBAUTEIL, INSBESONDERE KAROSSERIETEIL**
LIGHT-WEIGHT COMPONENT, ESPECIALLY BODY PART
COMPOSANT LEGER, NOTAMMENT PIECE DE CARROSSERIE

(30) Priorität: 31.10.2001 DE 10153712
(43) Veröffentlichungstag der Anmeldung: 28.07.2004
(73) Patentinhaber: Imperia Gesellschaft für angewandte fahrzeugentwicklung MBH, 52070 Aachen (DE)
(72) Erfinder: ROETH, Thilo, 52074 Aachen (DE); VOMHOF, Reinhard, 52066 Aachen (DE)
(86) Internationale Anmeldenummer: PCT/DE2002/003978
(87) Internationale Veröffentlichungsnummer: WO 2003/037700

(56) Entgegenhaltungen:
- EP-A- 0 995 668
- EP-A- 1 138 581
- DE-A- 19 508 970
- DE-A- 19 523 112

## Beschreibung

Die Erfindung betrifft ein Leichtbauteil, insbesondere ein Karosserieteil, das Stahlblech und Leichtmetall umfasst.

Aus der deutschen Offenlegungsschrift DE 41 03 036 A1 ist ein gegossenes Fahrzeugaufbauteil aus einer Leichtmetalllegierung mit einer angegossenen oder eingegossenen Stahlblechstruktur nach dem Oberbegriff des Anspruchs 1 bekannt. Die Stahlblechstruktur bildet entweder die Fahrzeugaußenhaut oder einen Flansch für die Verbindung mit einem weiteren Fahrzeugteil. Bei dem bekannten Fahrzeugaufbauteil ist die Stahlblechstruktur vollflächig mit der Leichtmetalllegierung verbunden. Es ist möglich, gezielt Hohlräume in dem Fahrzeugaufbauteil vorzusehen. Die DE 41 03 036 A1 lehrt, solche Hohlräume durch die eingegossene Stahlblechstruktur zu verstärken. Das Eingießen der Stahlblechstuktur hat sich in der Praxis als schwierig erwiesen.

Aus der europäischen Patentschrift EP 0 370 342 B1 ist ein Leichtbauteil aus einem schalenförmigen Grundkörper bekannt, dessen Innenraum Verstärkungsrippen aufweist. Die Verstärkungsrippen bestehen aus angespritztem Kunststoff und sind an diskreten Verbindungsstellen über Durchbrüche mit dem Grundkörper verbunden. Der Kunststoff reicht durch die Durchbrüche in dem Grundkörper hindurch und über die Flächen der Durchbrüche hinaus. Durch die Wahl der Materialkombination sind der Leistungsfähigkeit (besonders unter Berücksichtigung der Temperaturabhängigkeit) des Kunststoffes strukturelle Grenzen gesetzt. Kunststoff neigt bei extremen Belastungen zum Bröckeln.

Aufgabe der Erfindung ist es daher, ein Leichtbauteil zu schaffen, das einfacher herstellbar ist mit einer über ein weites Einsatzfeld hohen, strukturellen Leistungsfähigkeit, insbesondere auch bei hohen Temperaturen.

Die Aufgabe wird durch ein Leichtbauteil gelöst, das die Merkmale des Patentanspruchs 1 aufweist. Im Unterschied zu dem aus der DE 41 03 036 A1 bekannten Leichtbauteil ist das dünnwandige Stahlblech gemäß der vorliegenden Erfindung nicht vollflächig mit dem Leichtmetall verbunden, sondern nur lokal mit einer Verstärkungsstruktur aus Leichtmetall. Dabei bedeutet "lokal", dass das Stahlblech nur dort verstärkt wird, wo im eingebauten Zustand des Leichtbauteils hohe Belastungen in der Regel durch lokales Ausbeulen auftreten. Durch den Begriff "Verstärkungsstruktur" soll zum Ausdruck gebracht werden, dass auch in einem verstärkten Bereich des Stahlblechs noch freie Flächen vorhanden sind. Die Verstärkungsstruktur kann zum Beispiel rippenförmig oder wabenförmig ausgebildet sein und führt, gegenüber der aus der DE 41 03 036 A1 bekannten vollflächigen Aufbringung des Leichtmetalls auf das Stahlblech, zu einer erheblichen Materialeinsparung und somit zu einem geringeren Gewicht des Leichtbauteils. Die Verwendung von Leichtmetall als Verstärkungsstruktur liefert, gegenüber den aus der EP 0 370 342 B1 bekannten Kunststoffrippen, deutlich bessere Festigkeits- und Steifigkeitseigenschaften. Darüber hinaus hat sich im Rahmen der vorliegenden Erfindung überraschenderweise herausgestellt, dass bei der Verwendung von Leichtmetall als Verstärkungsstruktur auf fertigungstechnisch aufwendige und optisch auffällige Durchbrüche in dem Stahlblech verzichtet werden kann.

Ein bevorzugtes Ausführungsbeispiel des Leichtbauteils ist dadurch gekennzeichnet, dass die Verstärkungsstruktur mindestens eine lokale Verdickung umfasst, die an einer stark belasteten Stelle des Stahlblechs angeordnet ist. Durch eine solche, zum Beispiel rippenförmige, Verdickung kann ein Ausbeulen des Stahlblechs unter Belastung vermieden werden. Die Tatsache, dass die Verdickung sich nicht über die gesamte Oberfläche des Stahlblechs erstreckt, sondern lokal begrenzt ist, wirkt sich positiv auf das Gewicht des Leichtbauteils aus, ohne dass dessen Festigkeit oder Steifigkeit beeinträchtigt wird.

Ein weiteres bevorzugtes Ausführungsbeispiel des Leichtbauteils ist dadurch gekennzeichnet, dass die Verstärkungsstruktur mehrere Rippen umfasst, die im Wesentlichen senkrecht zu dem Stahlblech angeordnet sind. Diese Rippenform hat sich bei im Rahmen der vorliegenden Erfindung durchgeführten Untersuchungen sowohl im Hinblick auf die Stabilität als auch unter fertigungstechnischen Gesichtspunkten als besonders vorteilhaft erwiesen.

Ein weiteres bevorzugtes Ausführungsbeispiel des Leichtbauteils ist dadurch gekennzeichnet, dass die Rippen kreuzweise miteinander verbunden sind. Die kreuzweise Anordnung der Rippen ermöglicht die Aufnahme von Kräften aus verschiedenen Richtungen.

Ein weiteres bevorzugtes Ausführungsbeispiel des Leichtbauteils ist dadurch gekennzeichnet, dass die Verstärkungsstruktur nur auf einer Seite an das Stahlblech angegossen oder in das Stahlblech eingegossen ist. Dadurch wird gewährleistet, dass die andere Seite des Stahlblechs durch die Verstärkungsstruktur optisch nicht beeinträchtigt wird. Insbesondere sind in dem Stahlblech keine Durchbrüche vorgesehen.

Ein weiteres bevorzugtes Ausführungsbeispiel des Leichtbauteils ist dadurch gekennzeichnet, dass die Verstärkungsstruktur formschlüssig mit dem Stahlblech verbunden ist. Durch den Formschluss wird eine besonders stabile Verbindung zwischen dem Stahlblech und der Verstärkungsstruktur gewährleistet.

Das Stahlblech ist als länglicher Träger mit einem offenen, insbesondere U-förmigen Querschnitt mit einer Basis ausgebildet, von der zwei Schenkel ausgehen. Der offene, insbesondere U-förmige Querschnitt dient zur Aufnahme der Verstärkungsstruktur im Inneren des Trägers. Nach außen hin weist der Träger eine durchgehende Oberfläche ohne Durchbrüche oder Unterbrechungen auf.

Ein weiteres bevorzugtes Ausführungsbeispiel des Leichtbauteils ist dadurch gekennzeichnet, dass sowohl die Basis als auch die beiden Schenkel des Trägers mit der Verstärkungsstruktur verbunden sind. Dadurch wird eine besonders stabile Verbindung zwischen der Verstärkungsstruktur und dem Stahlblech gewährleistet. Die Verbindung zwischen dem Stahlblech und der Verstärkungsstruktur wird durch Angießen der Verstärkungsstruktur an das Stahlblech geschaffen.

Ein weiteres bevorzugtes Ausführungsbeispiel des Leichtbauteils ist dadurch gekennzeichnet, dass von den beiden Schenkeln Laschen ausgehen, an welche die Verstärkungsstruktur angegossen ist. Dadurch wird ein Ablösen der Verstärkungsstruktur von den beiden Schenkel im belasteten Zustand des Trägers sicher verhindert. Die Laschen können auch komplett in die Verstärkungsstruktur eingegossen sein.

Ein weiteres bevorzugtes Ausführungsbeispiel des Leichtbauteils ist dadurch gekennzeichnet, dass die Verstärkungsstruktur mit Hilfe von Befestigungsmitteln an den beiden Laschen befestigt ist. Durch die zusätzlichen Befestigungsmittel kann die Stabilität der Verbindung zwischen den Laschen und der Verstärkungsstruktur noch erhöht werden. Bei den Befestigungsmitteln kann es sich um Nieten handeln, die vor dem Gießen in das Stahlblech eingesetzt und von der Verstärkungsstruktur umgossen werden. Statt der Niete können auch Bolzen verwendet werden, die an das Stahlblech angeschweißt werden.

Ein weiteres bevorzugtes Ausführungsbeispiel des Leichtbauteils ist dadurch gekennzeichnet, dass die Verstärkungsstruktur mit Hilfe von Befestigungsmitteln, wie Niete oder Bolzen, an der Basis des Trägers befestigt ist. Durch die zusätzlichen Befestigungsmittel an der Basis des Trägers kann die Stabilität der Verbindung zwischen dem Stahlblech und der Verstärkungsstruktur noch erhöht werden.

Ein weiteres bevorzugtes Ausführungsbeispiel des Leichtbauteils ist dadurch gekennzeichnet, dass die Verstärkungsstruktur durch in dem Stahlblech ausgebildete Erhöhungen und/oder Vertiefungen, insbesondere Sicken, an dem Stahlblech gehalten ist. Dadurch wird eine besonders stabile mechanische Verankerung der Verstärkungsstruktur an dem Stahlblech gewährleistet, die zudem einfach herstellbar ist.

Ein weiteres bevorzugtes Ausführungsbeispiel des Leichtbauteils ist dadurch gekennzeichnet, dass der längliche Träger an mindestens einem Ende, in der Draufsicht betrachtet, T-förmig ausgebildet ist. Das T-förmige Ende des Trägers schafft drei Anschlussstellen für weitere Teile.

Ein weiteres bevorzugtes Ausführungsbeispiel des Leichtbauteils ist dadurch gekennzeichnet, dass das Stahlblech eine Dicke von weniger als 1 mm aufweist. Bei im Rahmen der vorliegenden Erfindung durchgeführten Untersuchungen hat sich herausgestellt, dass die Verstärkungsstruktur aus Leichtmetall auch bei einer Stahlblechdicke unter 1 mm noch eine ausreichende Festigkeit und Steifigkeit liefert.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
- Figur 1: eine perspektivische Darstellung eines T-förmigen Leichtbauteils gemäß einer ersten Ausführungsform der Erfindung und
- Figur 2: die Ansicht eines Schnitts entlang der Linie II-II in Figur 1.

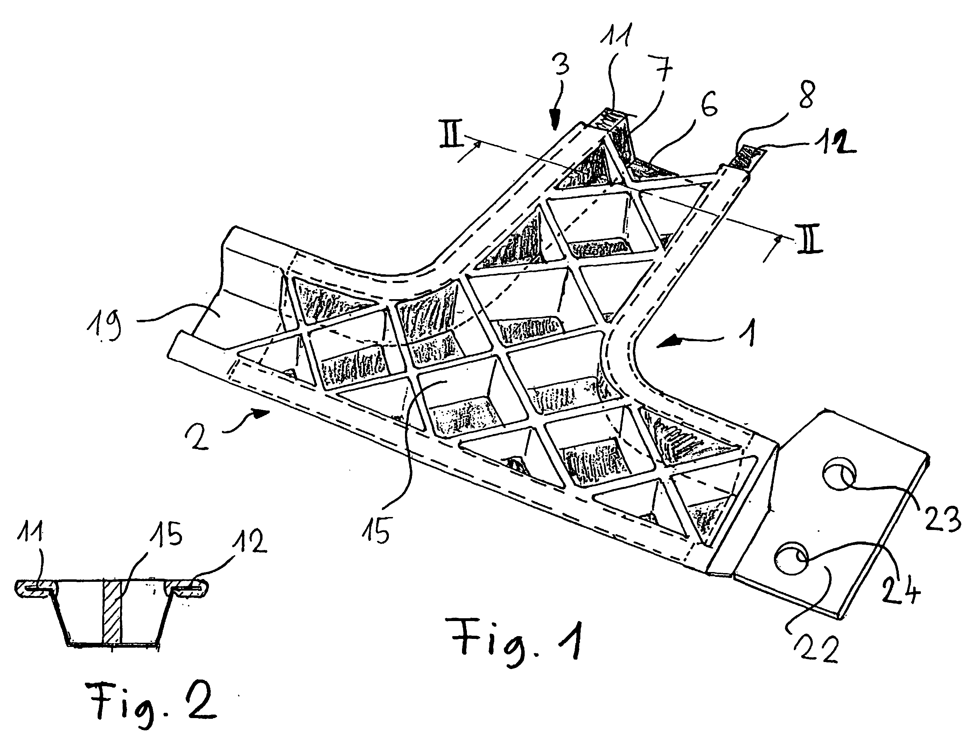

In Figur 1 ist ein Knotenpunkt 1 aus der B-Säule eines Kraftfahrzeuges dargestellt. In dem Knotenpunkt 1 ist ein länglicher Träger 2 mit einem weiteren länglichen Träger 3 T-förmig verbunden. Die Träger 2 und 3 sind einstückig miteinander verbunden und weisen einen U-förmigen Querschnitt mit einer Basis 6 auf, von der zwei Schenkel 7 und 8 ausgehen. An den freien Enden der Schenkel 7 und 8 sind Laschen 11 und 12 abgewinkelt. Die Basis 6, die Schenkel 7 und 8 sowie die Laschen 11 und 12 sind einstückig aus Stahlblech gebildet.

Zwischen den Schenkeln 7 und 8 ist eine Kreuzrippenstruktur 15 aus Leichtmetall eingebettet, die senkrecht zu der Basis 6 aus Stahlblech angeordnet ist. In der in Figur 2 dargestellten Schnittansicht sieht man, dass die Laschen 11 und 12 in die Verstärkungsstruktur aus Leichtmetall eingegossen sind. Das Stahlblech ist in Figur 1 an Stellen, wo es nicht sichtbar wäre, gestrichelt dargestellt.

Die beiden Enden des Trägers 2 sind unterschiedlich ausgebildet. Das in Figur 1 links angeordnete Ende 19 des Trägers 2 ist als Leichtmetallprofil ganz aus Leichtmetall, ohne Stahlblech, gebildet. An einem derart ausgebildeten Ende 19 können andere Extrossionsprofile aus Leichtmetall angefügt werden.

Das in Figur 1 rechte Ende 22 des Trägers 2 ist als aus Leichtmetall gegossener Flansch mit zwei Durchgangslöchern 23 und 24 zur Aufnahme von Befestigungselementen ausgebildet. An dem Flansch können weitere Teile befestigt werden.

Ein Ende des Trägers 3 geht in den senkrecht dazu angeordneten Träger 2 über. An dem freien Ende des Trägers 3 ragt das U-förmige Stahlblechprofil aus der Leichtmetallstruktur heraus. Das Stahlblech hat eine Dicke von etwa 1 mm. An dem reinen Stahlblech können weitere Profile aus Blech, zum Beispiel durch Schweißen, befestigt werden.

Bei dem erfindungsgemäßen Leichtbauteil dient das Leichtmetall zur Stabilisierung des dünnwandigen Stahlblechs. Durch die lokale Verstärkung des Stahlblechs mit Leichtmetall können deutlich geringere Stahlblechdicken verwendet werden als bei herkömmlichen Leichtbauteilen. Es wird nur da verstärkt, wo es aufgrund der im Betrieb auftretenden Belastungen nötig ist.

## Patentansprüche

1. Leichtbauteil, insbesondere Karosserieteil, das Stahlblech und Leichtmetall umfasst, wobei das Stahlblech (6 bis 8) dünnwandig ausgebildet ist, insbesondere eine Dicke von weniger als 2 mm hat, **dadurch gekennzeichnet, dass** das Stahlblech (6 bis 8) als länglicher Träger (2,3) mit einem offenen, insbesondere U-förmigen Querschnitt mit einer Basis (6) ausgebildet ist, von der zwei Schenkel (7,8) ausgehen und dass das Stahlblech (6 bis 8) mindestens eine freie Fläche aufweist, die lokal mit einer gegossenen oder gesinterten Verstärkungsstruktur (15) aus Leichtmetall versehen ist.

2. Leichtbauteil nach Anspruch 1, **dadurch gekennzeichnet, dass** die Verstärkungsstruktur (15) mindestens eine lokale Verdickung umfasst, die an einer stark belasteten Stelle des Stahlblechs angeordnet ist.

3. Leichtbauteil nach einem der vorhergehenden Ansprüche, **dadurch gekennzeichnet, dass** die Verstärkungsstruktur (15) mehrere Rippen umfasst, die im Wesentlichen senkrecht zu dem Stahlblech angeordnet sind.

4. Leichtbauteil nach Anspruch 3, **dadurch gekennzeichnet, dass** die Rippen (15) kreuzweise miteinander verbunden sind.

5. Leichtbauteil nach einem der vorhergehenden Ansprüche, **dadurch gekennzeichnet, dass** die Verstärkungsstruktur (15) nur auf einer Seite an das Stahlblech angegossen oder in das Stahlblech eingegossen ist.

6. Leichtbauteil nach einem der vorhergehenden Ansprüche, **dadurch gekennzeichnet, dass** die Verstärkungsstruktur (15) formschlüssig mit dem Stahlblech verbunden ist.

7. Leichtbauteil nach einem der vorherigen Ansprüche, **dadurch gekennzeichnet, dass** sowohl die Basis (6) als auch die beiden Schenkel (7,8) des Trägers mit der Verstärkungsstruktur verbunden sind.

8. Leichtbauteil nach einem der vorherigen Ansprüche, **dadurch gekennzeichnet, dass** von den beiden Schenkeln (7,8) Laschen (11,12) ausgehen, an welche die Verstärkungsstruktur (15) angegossen ist.

9. Leichtbauteil nach Anspruch 8, **dadurch gekennzeichnet, dass** die Verstärkungsstruktur (15) mit Hilfe von Befestigungsmitteln an den beiden Laschen befestigt ist.

10. Leichtbauteil nach Anspruch 8 oder 9, **dadurch gekennzeichnet, dass** die Verstärkungsstruktur (15) mit Hilfe von Befestigungsmitteln an der Basis des Trägers befestigt ist.

11. Leichtbauteil nach einem der vorhergehenden Ansprüche, **dadurch gekennzeichnet, dass** die Verstärkungsstruktur (15) durch in dem Stahlblech ausgebildete Erhöhungen und/oder Vertiefungen, insbesondere Sicken, an dem Stahlblech gehalten ist.

12. Leichtbauteil nach einem der Ansprüche 7 bis 11, **dadurch gekennzeichnet, dass** der längliche Träger (3) an mindestens einem Ende, in der Draufsicht betrachtet, T-förmig ausgebildet ist.

## Claims

1. A lightweight part, particularly a vehicle body part, which includes sheet steel and light metal, wherein
the sheet steel (6, to 8) is implemented as thinwalled, particularly having a thickness of less than 2 mm, **characterised in that** the sheet steel (6 to 8) is constructed as an oblong profiled beam (2, 3) with an open, especially U-shaped cross-section with a base (6) from which two legs (7, 8) extend and that the sheet steel (6 to 8) has at least one free area which is locally provided with a cast or sintered reinforcement structure (15) made of light metal.

2. The lightweight part according to Claim 1,
**characterised in that**
the reinforcement structure (15) includes at least one local thickening which is positioned at a strongly loaded point of the sheet steel.

3. The lightweight part according to one of the preceding claims,
**characterised in that**
the reinforcement structure (15) includes multiple ribs which are positioned essentially perpendicularly to the sheet steel.

4. The lightweight part according to Claim 3,
**characterised in that**
the ribs (15) are connected to one another in crosses.

5. The lightweight part according to one of the preceding claims,
**characterised in that**
the reinforcement structure (15) is cast onto the sheet steel or is cast into the sheet steel on only one side.

6. The lightweight part according to one of the preceding claims,
**characterised in that**
the reinforcement structure (15) is connected to the sheet steel in a form-fitting way.

7. The lightweight part according to one of the preceding claims,
**characterised in that**
both the base (6) and the two legs (7, 8) of the beam are connected to the reinforcement structure.

8. The lightweight part according to one of the preceding claims,
**characterised in that**
flanges (11, 12), onto which the reinforcement structure (15) is cast, extend from the two legs (7, 8).

9. The lightweight part according to Claim 8,
**characterised in that**
the reinforcement structure (15) is attached to the two flanges with the aid of attachment means.

10. The lightweight part according to Claim 8 or 9,
**characterised in that**
the reinforcement structure (15) is attached to the base of the beam with the aid of attachment means.

11. The lightweight part according to one of the preceding claims,
**characterised in that**
the reinforcement structure (15) is held on the sheet steel through protrusions and/or depressions, particularly beads, implemented in the sheet steel.

12. The lightweight part according to one of Claims 7 to 11,
**characterised in that**
the oblong beam (3) is implemented as T-shaped on at least one end, when viewed in the top view.

## Revendications

1. Composant léger, en particulier pièce de carrosserie, qui comprend de la tôle d'acier et du métal léger, la tôle d'acier (6 à 8) étant configurée à parois minces et ayant en particulier une épaisseur inférieure à 2 mm, **caractérisé en ce que** la tôle d'acier (6 à 8) est configurée comme support oblong (2,3) de section transversale ouverte et en particulier en forme de U, et présente une âme (6) de laquelle débordent deux branches (7, 8) et **en ce que** la tôle d'acier (6 à 8) a au moins une surface libre dotée localement d'une structure de renforcement (15) coulée ou frittée en métal léger.

2. Composant léger selon la revendication 1, **caractérisé en ce que** la structure de renforcement (15) comprend au moins un épaississement local agencé à un endroit fortement sollicité de la tôle d'acier.

3. Composant léger selon l'une des revendications précédentes, **caractérisé en ce que** la structure de renforcement (15) comprend plusieurs nervures agencées essentiellement perpendiculairement à la tôle d'acier.

4. Composant léger selon la revendication 3, **caractérisé en ce que** les nervures (15) sont agencées en croix.

5. Composant léger selon l'une des revendications précédentes, **caractérisé en ce que** la structure de renforcement (15) n'est posée par coulée sur la tôle d'acier ou n'est coulée dans celle-ci que sur un côté.

6. Composant léger selon l'une des revendications précédentes, **caractérisé en ce que** la structure de renforcement (15) est reliée en correspondance de forme à la tôle d'acier.

7. Composant léger selon l'une des revendications précédentes, **caractérisé en ce que** tant l'âme (6) que les deux branches (7, 8) du support sont reliées à la structure de renforcement.

8. Composant léger selon l'une des revendications précédentes, **caractérisé en ce que** des deux branches (7, 8) débordent des pattes (11, 12) sur lesquelles la structure de renforcement (15) est placée par coulée.

9. Composant léger selon la revendication 8, **caractérisé en ce que** la structure de renforcement (15) est fixée sur les deux pattes à l'aide de moyens de fixation.

10. Composant léger selon la revendication 8 ou 9, **caractérisé en ce que** la structure de renforcement (15) est fixée sur la base du support à l'aide de moyens de fixation.

11. Composant léger selon l'une des revendications précédentes, **caractérisé en ce que** la structure de renforcement (15) est maintenue sur la tôle d'acier par des reliefs et/ou des creux et en particulier des moulures réalisées sur la tôle d'acier.

12. Composant léger selon l'une des revendications 7 à 11, **caractérisé en ce que** vu par le dessus, le support oblong (3) est configuré en forme de T au moins à une extrémité.
